# EUROPEAN PATENT APPLICATION

(11) **EP 4 693 627 A1**
(43) Date of publication of application: **11.02.2026**
(21) Application number: 25160740.4
(22) Date of filing: 27.02.2025
(51) Int. Cl.: H01M 50/103, H01M 50/15, H01M 50/528, H01M 50/538, H01M 50/564, H01M 50/567, H01M 50/566, H01M 50/531, H01M 50/536

(54) **SECONDARY BATTERY INCLUDING ELECTRODE TAB-TERMINAL CONNECTION MEMBER AND METHOD OF MANUFACTURING THE SAME**

(30) Priority: 06.08.2024 KR 20240104980
(71) Applicant: SAMSUNG SDI CO., LTD., Yongin-si, Gyeonggi-do 17084 (KR)
(72) Inventor: GUEN, Minhyung, 17084 Yongin-si (KR)
(74) Representative: Marks & Clerk LLP

(57) **Abstract**

A secondary battery includes a can with an opening, an electrode assembly accommodated in the can, the electrode assembly including an electrode tab, a terminal electrically connected to the electrode tab of the electrode assembly, the terminal being positioned outside the can, and a plurality of connection members electrically connecting the electrode tab to the terminal, the plurality of connection members including two or more groups.

## Description

### BACKGROUND

### 1. Field

The present disclosure relates to a secondary battery, and more specifically, to a secondary battery including a connection member for electrically connecting an electrode tab or a related member to a terminal or a related member, and a method of manufacturing the same.

### 2. Description of Related Art

Secondary batteries are batteries that can be (re)charged and discharged unlike primary batteries that cannot be recharged. A secondary battery may include an electrode assembly composed of a positive electrode plate, a separator, and a negative electrode plate, a can (or case) that accommodates the electrode assembly, and an external terminal for connecting the electrode assembly to an external power source and load.

Positive and negative electrode tabs may be formed on the electrode assembly, and the electrode tabs or related members (e.g., a current collector, a connection member, and an auxiliary tab) may be electrically connected to positive and negative terminals disposed outside or related members (e.g., a rivet terminal, a cap plate, and a rivet terminal). As a medium for such electrical connection, thin conductive plates (e.g., aluminum sheets) may be used by being stacked in layers.

The above information disclosed in this Background section is for enhancement of understanding of the background of the present disclosure, and therefore, it may contain information that does not constitute a related (or prior) art.

### SUMMARY

According to one aspect of the present disclosure, there is provided a secondary battery including a can in which an opening is formed, an electrode assembly accommodated in the can and including an electrode tab, a terminal electrically connected to the electrode tab of the electrode assembly and positioned outside the can, and a plurality of connection members that electrically connect the electrode tab to the terminal, wherein the plurality of connection members include two or more groups.

According to another aspect of the present disclosure, there is provided a method of manufacturing a secondary battery, which includes manufacturing a can in which an opening is formed, manufacturing an electrode assembly including an electrode tab, inserting the electrode assembly into the opening of the can, manufacturing a terminal electrically connected to the electrode tab of the electrode assembly, and connecting a plurality of connection members for electrically connecting the electrode tab to the terminal, wherein the plurality of connection members include two or more groups.

According to still another aspect of the present disclosure, there is provided a secondary battery including a can having openings formed at both sides, an electrode assembly accommodated in the can and including a first electrode tab and a second electrode tab that are positioned at both sides of the electrode assembly, respectively, a first current collector bonded to the first electrode tab of the electrode assembly, a second current collector bonded to the second electrode tab of the electrode assembly, a first terminal and a second terminal electrically connected to the first electrode tab and the second electrode tab, respectively, a plurality of first connection members that electrically connect the first current collector to the first terminal, and a plurality of second connection members that electrically connect the second current collector to the second terminal, wherein the plurality of first connection members include two or more groups, and the plurality of second connection members include two or more groups.

At least some of the above and other features of the invention are set out in the claims.

### BRIEF DESCRIPTION OF THE DRAWINGS

Features will become apparent to those of skill in the art by describing in detail embodiments with reference to the attached drawings, in which:
FIG. 1 is a perspective view of a secondary battery according to some embodiments of the present disclosure;
FIG. 2 is a cross-sectional view along line I-I' FIG. 1;
FIG. 3 is a detailed view of portion A of FIG. 2, which shows a coupling relationship between an electrode assembly and a cap assembly according to one embodiment of the present disclosure;
FIG. 4 shows a state in which an electrode assembly inserted into a can is connected to cap assemblies by a connection member;
FIG. 5A is a detailed configuration diagram of a comparative example;
FIG. 5B shows a state in which a connection member is bent to bond a cap plate to an opening of a can;
FIG. 6A shows a state before a plurality of connection members according to some embodiments of the present disclosure are bent;
FIG. 6B shows a state in which two groups of connection members are bent;
FIG. 6C shows an embodiment in which an insulator functioning as a spacer is inserted between a first group of connection members and a second group of connection members;
FIG. 7A shows a state before two groups of connection members according to some embodiments of the present disclosure are bent;
FIG. 7B shows a state in which two groups of connection members are bent;
FIG. 7C shows an embodiment in which a spacer insulator is inserted between a first group of connection members and a second group of connection members;
FIG. 8 shows a state before three groups of connection members according to some embodiments of the present disclosure are bent;
FIG. 9 shows different shapes of first welded portions of three groups of connection members;
FIG. 10 is a view of a secondary battery module in which secondary batteries manufactured according to embodiments of the present disclosure are arranged;
FIG. 11 is a view of a secondary battery pack composed of the secondary battery module shown in FIG. 10; and
FIG. 12 shows a vehicle including the secondary battery pack shown in FIG. 11.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

It will also be understood that if an element or layer is referred to as being "linked to," "connected to," or "coupled to" another element or layer, it may be directly linked, connected, or coupled to the other element or layer or one or more intervening elements or layers may also be present. When an element or layer is referred to as being "directly linked to," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present disclosure and is not intended to limit the present disclosure.

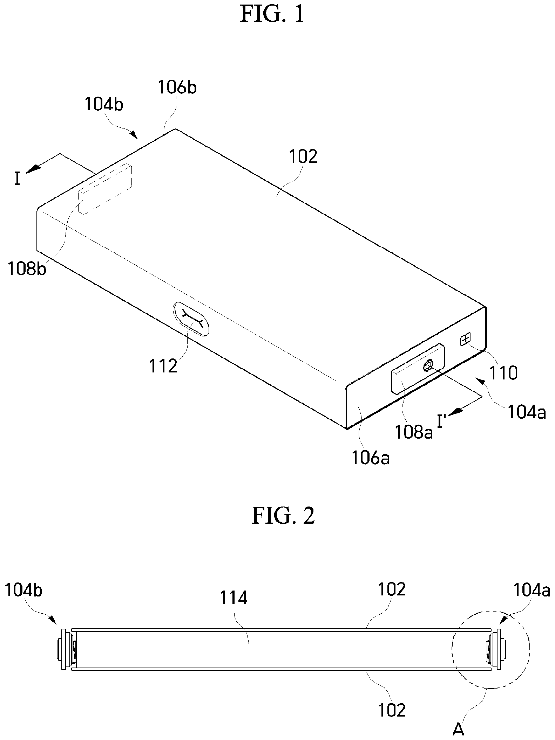

FIG. 1 is a perspective view of a secondary battery according to some embodiments of the present disclosure.

Referring to FIG. 1, a can 102 may form (e.g., define) the overall exterior of a secondary battery and may be made of a conductive metal such as aluminum, an aluminum alloy, or nickel-plated steel. Both (e.g., opposite) ends of the can 102 may be open so that an electrode assembly may be accommodated therein.

First and second cap assemblies 104a and 104b may include first and second cap plates 106a and 106b, respectively, that cover the open ends of the can 102. A first terminal 108a may be installed on the first cap assembly 104a at one side. The first terminal 108a may be electrically connected to a positive or negative electrode of an electrode assembly therein and may be installed outside the first cap plate 106a. In addition, a second terminal 108b may be installed on the second cap assembly 104b at the other side. The second terminal 108b may be electrically connected to the negative or positive electrode of the electrode assembly therein and installed outside the second cap plate 106b.

An electrolyte injection port 110 may be formed on the first cap plate 106a and/or the second cap plate 106b. In addition, a vent 112 for discharging gas generated inside the battery (e.g., inside the can 102) may be installed on one surface of the can 102.

FIG. 2 is a cross-sectional view along line I-I' of FIG. 1, which shows a coupling relationship between an electrode assembly 114 inside the can 102 and each of the first and second cap assemblies 104a and 104b.

Referring to FIG. 2, the electrode assembly 114 may be formed by winding or stacking a laminate of a first electrode plate, a separator, and a second electrode plate that are formed in a plate shape or a film shape. For example, when the electrode assembly 114 is a winding type (e.g. a jelly roll type), a winding axis may be parallel to a longitudinal direction of the can 102. In another example, the electrode assembly 114 may be a stack type rather than the winding type. In yet another example, the electrode assembly 114 may be a Z-stack type electrode assembly in which the first electrode plate and the second electrode plate are inserted into both sides of the separator folded in a Z-stack. In addition, the electrode assembly 114 may have one or more electrode assembly units stacked and may be accommodated in the can 102, e.g., any suitable number of electrode assemblies may be accommodated in the can 112. The first electrode plate of the electrode assembly 114 may function as a negative electrode, and the second electrode plate may function as a positive electrode, and vice versa.

The first electrode plate may be formed by having a base substrate made of a metal foil such as copper, a copper alloy, nickel, or a nickel alloy coated with a first electrode active material such as graphite or carbon and may include a first electrode tab (or a first uncoated portion) that is an area in which the first electrode active material is not coated. The first electrode tab may be a passage for a current flow between the first electrode plate and the first terminal 108a. In some examples, the first electrode tab may be formed by cutting the first electrode plate in advance to protrude to one side when the first electrode plate is manufactured and may protrude further to one side than the separator without separate cutting.

The second electrode plate may be formed by having a base substrate made of a metal foil such as aluminum or an aluminum alloy coated with a second electrode active material such as a transition metal oxide and may include a second electrode tab (or a second uncoated portion) that is an area in which the second electrode active material is not coated. The second electrode tab may be a passage for a current flow between the second electrode plate and the second terminal 108b. In some examples, the second electrode tab may be formed by cutting the second electrode plate in advance to protrude to the other side when the second electrode plate is manufactured and may protrude further to the other side than the separator without separate cutting.

The separator functions to prevent a short between the first electrode plate and the second electrode plate while allowing the movement of lithium ions. The separator may be formed of, e.g., a polyethylene film, a polypropylene film, a polyethylene-polypropylene film, or the like.

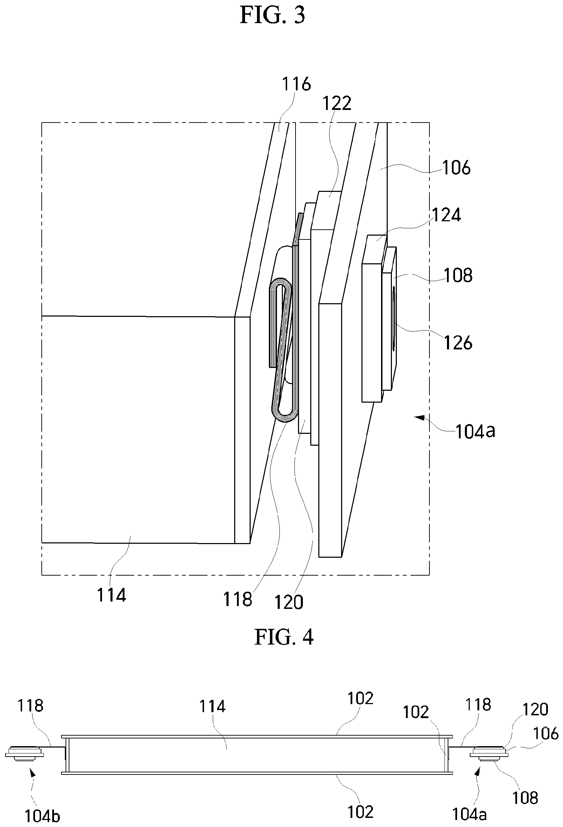

FIG. 3 is a detailed view of portion A of FIG. 2, which shows the coupling relationship between the electrode assembly 114 and the first cap assembly 104a according to an embodiment of the present disclosure. Although only the first cap assembly 104a disposed at one end portion will be described with reference to FIG. 3, this description may be applied to the second cap assembly 104b disposed at the other end portion. Since the first cap assembly 104a described here is connected to the first electrode plate of the electrode assembly 114, to avoid confusion, the first electrode plate and the first electrode tab are simply referred to as an "electrode plate" and "electrode tab. "

Referring to FIG. 3, a current collector 116 may be welded to cover the electrode tab(s) extending from the electrode plate of the electrode assembly 114. In this case, as in FIG. 3, the electrode tab(s) are covered by the current collector 116 and are not visible. This is because the electrode tab(s) are disposed between an end surface of the electrode assembly 114 and the current collector 116 in FIG. 3.

A first end of a connection member 118 may be welded to the current collector 116. The connection member 118 may be a medium that connects the terminal 108 exposed to the outside to the current collector 116 welded to the electrode assembly 114. The connection member 118 may be folded, as shown in FIG. 3. To bend the connection member 118, since the connection member 118 needs to be flexible and have a current capacity of a predetermined level or more, a thin conductive plate (e.g., an aluminum sheet) may be used by being stacked in layers. The bending shape of the connection member 118 may be folded into any convenient shape. A second end of the connection member 118 may be welded to a rivet terminal 120. The rivet terminal 120 may be a portion included in the terminal 108 exposed to the outside or connected to the terminal 108.

The rivet terminal 120 may be insulated from an inner surface of the cap plate 106 through an internal insulator 122, e.g., the internal insulator 122 may be positioned between the rivet terminal 120 and the inner surface of the cap plate 106. The current collector 116, the connection member 118, the rivet terminal 120, and the insulator 122 are members that are positioned inside the cap plate 106 and are present inside the battery can 102.

The terminal 108 insulated by an external insulator 124 may be positioned outside the cap plate 106, e.g., the external insulator 124 may be positioned between the terminal 108 and an external surface of the cap plate 106. As described above, the terminal 108 may be electrically connected to the rivet terminal 120 therein. For such an electrical connection, a through hole 126 may be formed in the terminal 108, and a connecting pillar of the rivet terminal 120 may be riveted by being inserted into the through hole 126. In another embodiment, the terminal 108 positioned outside the battery and the rivet terminal 120 positioned inside the battery may be integrated.

To achieve the structure of FIG. 3, a process of inserting the electrode assembly 114 into the interior of the can 102, a process of welding the current collector 116 to the electrode tab of the electrode assembly 114, a process of welding the connection member 118 to the rivet terminal 120 of the cap plate 106 to electrically connect the current collector 116 to the external terminal 108, and a process of bending the welded connection member 118 to attach the cap plate 106 to the open ends of the can 102 may be performed.

FIG. 4 is a side view of a state in which the process of welding the connection member 118 to the rivet terminal 120 to electrically connect the current collector 116 welded to the electrode tab of the electrode assembly 114 to the terminal 108 positioned outside the cap plate 106, after inserting the electrode assembly 114 into the can 102, has been completed.

Referring to FIG. 4, the connection member 118 may extend from the electrode assembly 114 toward an exterior of the can 102 in a straight line. A side terminal type secondary battery may be completed by bending the connection member 118 into a lying S shape, as shown in FIG. 3, and attaching the first and second cap assemblies 104a and 104b at both sides to the open ends of the can 102.

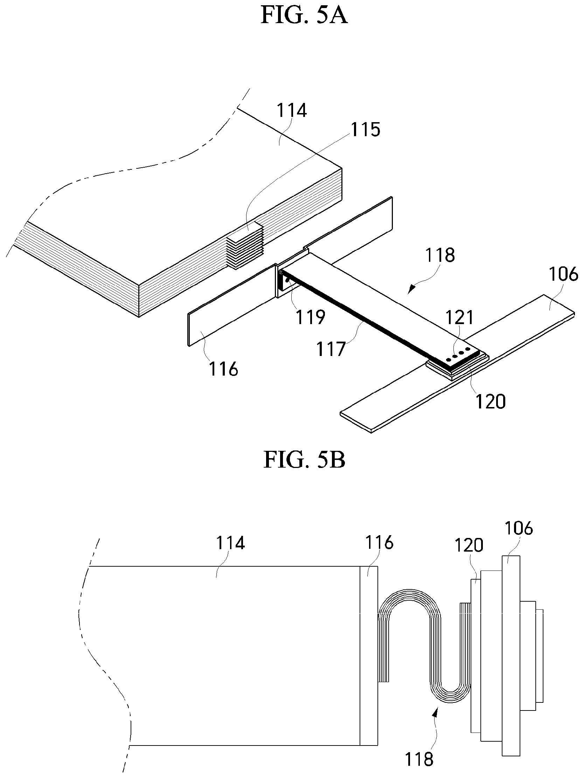

FIG. 5A is a detailed configuration diagram of a comparative structure, and FIG. 5B shows a state in which a connection member bonds the cap plate 106 to the opening of the can 102.

Referring to FIG. 5A and 5B, an electrode tab 115 formed on a pole plate forming the electrode assembly 114 may be welded by being covered by the current collector 116. The rivet terminal 120 may be attached to the inside of the cap plate 160. As described above, the rivet terminal 120 may be connected by being riveted to the terminal 108 outside the cap plate 106.

As described above, the connection member 118 connecting the current collector 116 to the rivet terminal 120 may be formed by stacking the plurality of thin plates 117 for easy bending, and a first end may be welded to the current collector 116 and a second end may be welded to the rivet terminal 120. A portion of the connection member 118 in which the first end is welded is referred to as a first welded portion 119, and a portion of the connection member 118 in which the second end is welded is referred to as a second welded portion 121.

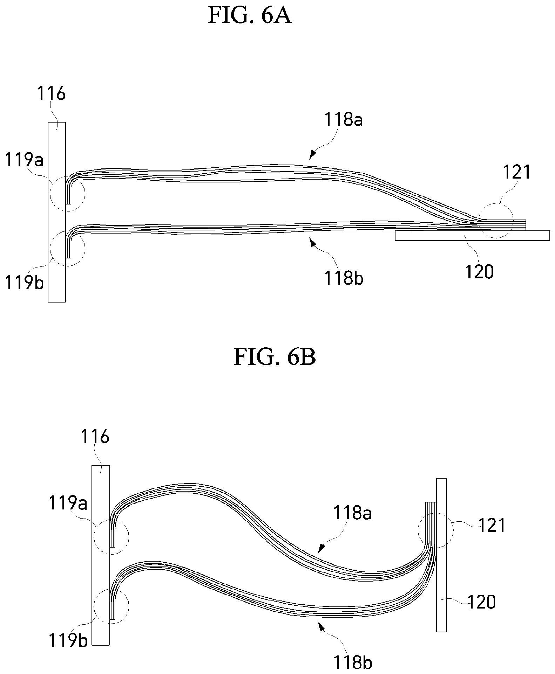

FIG. 6A shows a detailed diagram of a state before a plurality of connection members according to embodiments of the present disclosure are bent.

Referring to FIG. 6A, in the present embodiment, a plurality of connection members 118 may be partitioned into two groups of connection members, e.g., a first group of connection members 118a and a second group of connection members 118b. The plurality of connection members 118 partitioned into two groups are media that electrically connects the electrode tab 115 of the electrode assembly 114 accommodated in the can 102 having the openings to the terminal 108 positioned outside the can 102 as described above. As described above, the plurality of connection members 118 may be formed of thin plates for easy bending.

In order to connect the electrode tab 115 of the electrode assembly 114 to the terminal 108, according to some embodiments, the first ends of the connection members 118a and 118b may be welded to the current collector 116 bonded to the electrode tab 115, and the second ends of the connection members 118a and 118b may be welded to the rivet terminal 120 connected to the terminal 108. According to another embodiment, the first end of the connection member 118 may be welded to the current collector 116, and the second end of the connection member 118 may be welded to the cap plate 106.

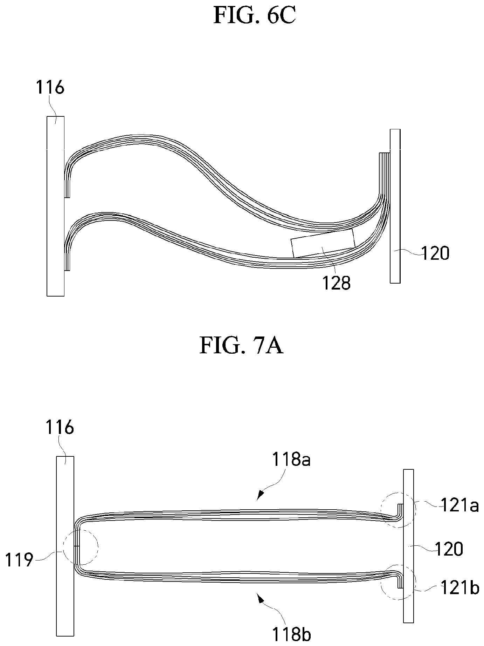

The first welded portions 119 of the first and second groups of connection members 118a and 118b may be formed separately in each group. For example, in FIG. 6A, a first welded portion 119a of the first group of connection members 118a and a first welded portion 119b of the second group of connection members 118b may be separated from each other (e.g., spaced apart from each other along the current collector 116). In another example, referring to FIG. 7A, the first welded portions 119 of the first and second groups of connection members 118a and 118b may be commonly formed in the groups of connection members 118 (e.g., the first welded portions of the first and second groups of connection members 118a and 118b may contact each other on the current collector 116).

In addition, the second welded portions 121 of the first and second groups of connection members 118a and 118b may be commonly formed in all groups. For example, in FIG. 6A, the second welded portion 121 of the first group of connection members 118a and the second welded portion 121 of the second group of connection members 118b form one second welded portion 121. In another example, referring to FIG. 7A, the second welded portions 121 of the first and second groups of connection members 118a and 118b may be formed separately in each group (e.g., separated and spaced apart from each other). For example, at least one group of the first welded portions 119a and the second welded portions 19b may be formed separated from each other.

FIG. 6B shows a state in which the first and second groups of connection members 118a and 118b are bent. Referring to FIG. 6B, the first group of connection members 118a and the second group of connection members 118b may be individually bent in an S shape and separated, thereby improving heat dissipation performance and reducing the possibility of disconnection of the connection members 118 even when an external circuit is shorted.

FIG. 6C shows an embodiment in which an insulator 128 that functions as a spacer is inserted between the first group of connection members 118a and the second group of connection members 118b to further reinforce the separability of the first group of connection members 118a and the second group of connection members 118b. This makes it possible to prevent contact between the first group of connection members 118a and the second group of connection members 118b.

FIG. 7A shows a state before the first and second groups of connection members 118a and 118b according to other embodiments of the present disclosure are bent.

Referring to FIG. 7A, the first welded portions 119 of the first and second groups of connection members 118a and 118b may be commonly formed in all groups. For example, in FIG. 7A, the first welded portion 119 of the first group of connection members 118a and the first welded portion 119 of the second group of connection members 118b are common (e.g., welded together and in contact with each other). To commonly form such a welded portion, the middle of a continuous long plate may be folded, disposed at a position of the first welded portion 119, and welded so that the plate is partitioned into the first group of connection members 118a and the second group of connection members 118b. In another example, one end portions of a plate for the separate first group of connection members 118a and a plate for the second group of connection members 118b may be welded after overlapping at the position of the first welded portion 119.

In addition, in FIG. 7A, second welded portions 121a and 121b of the first and second groups of connection members 118a and 118b may be formed separately in each of the groups of connection members 118a and 118b.

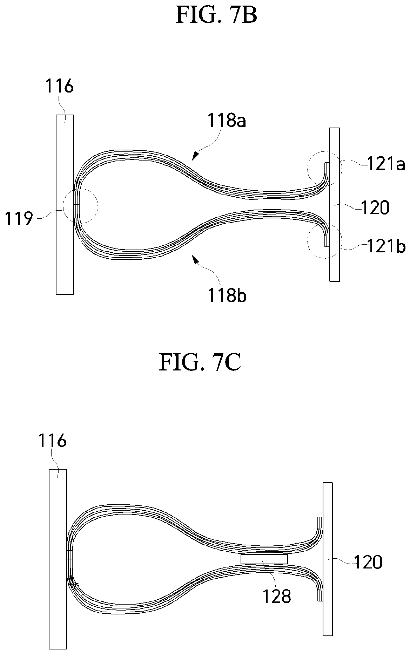

FIG. 7B shows a state in which the first and second groups of connection members 118a and 118b shown in FIG. 7A are bent. Since the first welded portions 119 of the first group of connection members 118a and the second group of connection members 118b are common, the first welded portions 119 may be naturally bent in a symmetrical S shape and separated.

FIG. 7C shows an embodiment in which the spacer insulator 128 is inserted between the first group of connection members 118a and the second group of connection members 118b to further reinforce the separability of the first group of connection members 118a and the second group of connection members 118b, as described in FIG. 6C.

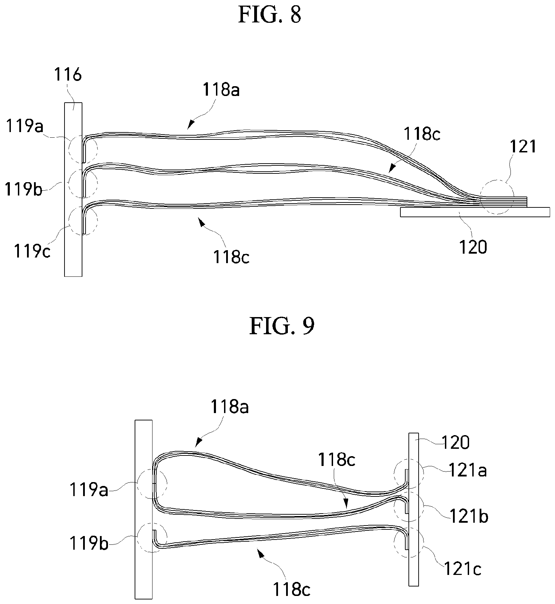

FIG. 8 shows a state before three groups of connection members 118 according to some embodiments of the present disclosure are bent. In the embodiment shown in FIG. 8, the plurality of connection members 118 are shown to be partitioned into three groups of connection members (e.g., a first group of connection members 118a, a second group of connection members 118b, and a third group of connection members 118c). However, the connection member 118 may be partitioned into four or more groups.

Referring to FIG. 8, the first welded portions of the first to third groups of connection members 118a, 118b, and 118c may be formed separately in each group of the connection members. For example, in FIG. 8A, the first welded portion 119a of the first group of connection member 118a, the first welded portion 119b of the second group of connection members 118b, and a first welded portion 119c of the third group of connection members 118c are separated from each other. In another example, the first welded portions of the first to third groups of connection members 118a, 118b, and 118c may be commonly formed in the groups of connection members.

In addition, the second welded portions of the first to third groups of connection members 118a, 118b, and 118c may be commonly formed in the groups of connection members 118a, 118b, and 118c. For example, in FIG. 8, the second welded portion of the first group of connection members 118a, the second welded portion of the second group of connection members 118b, and the third welded portion of the third group of connection members 118c may form one second welded portion 121 (e.g., may be formed on top of each other to overlap each). In another example, the second welded portions of the first to third groups of connection members 118a, 118b, and 118c may be formed separately in each group.

Even in the case of the first to third groups of connection members 118a, 118b, and 118c shown in FIG. 8, an insulator that functions as a spacer, as described above, may be used to reinforce the separability between the groups.

FIG. 9 shows different shapes of first welded portions of first to third groups of connection members 118a, 118b, and 118c. For example, the first welded portion 119a of the first group of connection members 118a and the first welded portion 119a of the second group of connection members 118b may be common, and the first welded portion 119b of the third group of connection members 118c may be formed separately. In addition, the second welded portions 121a, 121b, and 121c of the first to third groups of connection members 118a, 118b, and 118c may be formed separately in each group.

For convenience of description, the connection member that electrically connects one electrode tab to one terminal has been described above. The above description may be extensively applied to a first current collector and a second current collector respectively bonded to a first electrode tab and a second electrode tab that are formed in pairs on a negative electrode plate and a positive electrode plate of an electrode assembly, and a first terminal and a second terminal electrically connected to the first current collector and the second current collector, respectively.

When the above-described content is extensively applied to the positive and negative electrodes, the connection member may include a plurality of first connection members for electrically connecting the first current collector to the first terminal, and a plurality of second connection members for electrically connecting the second current collector to the second terminal. The plurality of first connection members may include two or more groups, and the plurality of second connection members may include two or more groups.

In addition, the plurality of first connection members may include a first welded portion formed by being welded to the current collector bonded to the electrode tab, and a second welded portion formed by being welded to the terminal, and the plurality of second connection members may include a third welded portion formed by being welded to the current collector bonded to the electrode tab, and a fourth welded portion formed by being welded to the terminal.

In this case, the first welded portion and the third welded portion may be formed separately in each of the groups of connection members or commonly in the groups. In addition, the second welded portion and the fourth welded portion may be formed separately in each of the groups of connection members or commonly in the groups.

The connection members 118 partitioned into two or more groups according to the present disclosure may be applied to a secondary battery having a side tab structure. The side terminal secondary battery shown in FIGS. 1, 2, and 4 may be included in the category of the side tab structure. In the secondary battery having the side tab structure, the first electrode tab and the second electrode tab may be positioned at both sides of the electrode assembly, respectively, and thus the current collector 116 may also be positioned at each of both sides of the electrode assembly 114. In addition, the first terminal and the second terminal electrically connected to the first electrode tab and the second electrode tab, respectively, may be positioned at both sides of a secondary battery can.

In addition, two groups or three groups or more of the connection members 118 according to the present disclosure may be applied to a secondary battery having a top tab structure. In the secondary battery having the top tab structure, the first electrode tab and the second electrode tab may be positioned together at one side of the electrode assembly, and thus the current collector 116 may also be positioned together above the electrode assembly 114. In addition, the first terminal and the second terminal electrically connected to the first electrode tab and the second electrode tab, respectively, may be positioned above the secondary battery can.

A method of manufacturing a secondary battery according to some embodiments of the present disclosure will be briefly described. The method of manufacturing the secondary battery may include manufacturing a can in which an opening is formed, manufacturing an electrode assembly including an electrode tab, inserting the electrode assembly into the opening of the can, manufacturing a terminal electrically connected to the electrode tab of the electrode assembly, and connecting a plurality of connection members for electrically connecting the electrode tab to the terminal. Here, the plurality of connection members may include two or more groups.

In some embodiments, the manufacturing of the electrode assembly may include bonding a current collector to the electrode tab.

In some embodiments, the connecting of the plurality of connection members may include welding first ends of the plurality of connection members to the current collector bonded to the electrode tab to form a first welded portion, and welding second ends of the plurality of connection members to the terminal to form a second welded portion.

In some embodiments, the manufacturing of the terminal may include connecting a rivet terminal positioned inside the can to the terminal, in which the second welded portion may be formed by welding the second ends of the plurality of connection members to the rivet terminal.

In some embodiments, the forming of the first welded portion may include forming the first welded portion separately in each of the groups of connection members or forming the first welded portion commonly in the groups. The forming of the second welded portion may include forming the second welded portion separately in each of the groups of connection members or forming the second welded portion commonly in the groups.

In some embodiments, the method may further include interposing an insulator between the groups of the plurality of connection members.

Hereinafter, suitable materials that may be usable for the secondary battery according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel oxide, a lithium cobalt oxide, a lithium manganese oxide, a lithium iron phosphate compound, a cobalt-free nickel-manganese oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-8-c}Co_{b}X_{c}O_{2-α}D_{α} (0.90≤a≤1.8, 0≤b≤0.5, 0≤c≤0.5, 0<α<2); LiₐNi_{1-8-c}Mn_{b}X_{c}O_{2-α}D_{α} (0.90≤a≤1.8, 0≤b≤0.5, 0≤c≤0.5, 0<a<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas, A may be Ni, Co, Mn, or a combination thereof; X may be Al, Ni, Co, Mn, Cr, Fe, Mg, Sr, V, a rare earth element, or a combination thereof; D may be O, F, S, P, or a combination thereof; G may be Al, Cr, Mn, Fe, Mg, La, Ce, Sr, V, or a combination thereof; and L¹ may be Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al).

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon negative electrode active material, which may include, e.g., crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si negative electrode active material or a Sn negative electrode active material may be used as the material capable of being doped and undoped with lithium. The Si negative electrode active material may be silicon, a silicon-carbon composite, SiOₓ (0<x<2), a Si alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate, an ester, an ether, a ketone, an alcohol solvent, an aprotic solvent, and may be used alone or in combination of two or more.

In addition, when a carbonate solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

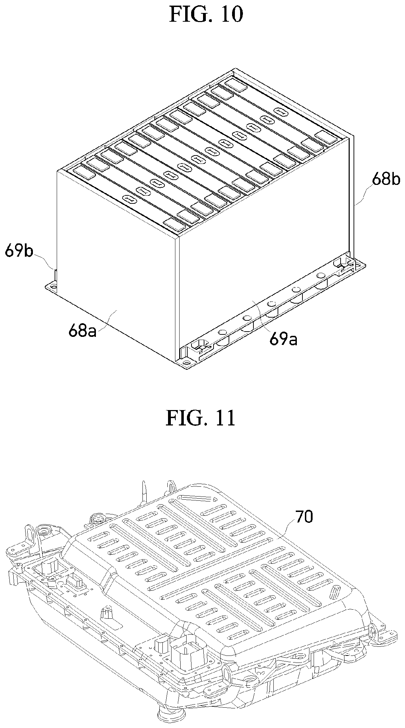

FIG. 10 is a view of a secondary battery module in which secondary batteries manufactured according to the embodiments of the present disclosure are arranged. With the high capacity of secondary batteries for driving electric vehicles or the like, a secondary battery module may be manufactured by arranging and connecting a plurality of secondary battery cells in a transverse direction and/or a longitudinal direction. To this end, a plurality of the secondary batteries may be arranged horizontally or stacked vertically in a space formed by a pair of opposing end plates 68a and 68b and a pair of opposing side plates 69a and 69b. The arrangement of the secondary battery may be designed to have an arrangement direction and number with which the desired voltage and current specifications are obtained.

FIG. 11 is an example diagram of a secondary battery pack 70 configured to apply the secondary battery module illustrated in FIG. 10 to an actual product (e.g., an automobile). The battery pack 70 may include an assembly to which individual batteries are electrically connected and a pack housing accommodating the same. In the drawings, for convenience of illustration, components including a bus bar, a cooling unit, external terminals for electrically connecting batteries, etc., are not shown.

The battery pack 70 may be mounted on (or in) a vehicle. The vehicle may be, e.g., an electric vehicle, a hybrid vehicle, or a plug-in hybrid vehicle. The vehicle may be, e.g., a four-wheeled vehicle or a two-wheeled.

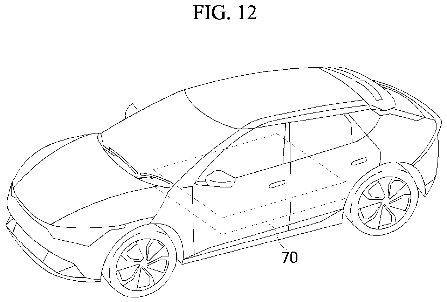

FIG. 12 shows a vehicle that includes the battery pack 70 shown in FIG. 11 on the lower body thereof. The vehicle may operate by (e.g., may be powered by) receiving power from the battery pack 70.

By way of summation and review, positive and negative electrode tabs may be electrically connected to positive and negative terminals via thin conductive plates stacked in layers. However, since a current flowing through such an electrical connection concentrates in the conductive plates (which are attached) and generates heat, the heat dissipation effect may be weak. For example, when a low resistance short-circuit (1 mΩ to 2.0 mΩ) state occurs in an external circuit, a high current may flow through the conductive plates and disconnect the conductive plates.

In contrast, the present disclosure is directed to providing a secondary battery for reducing the generation of heat in a medium that electrically connects an electrode tab or a related member of an electrode assembly, which is one passage through which a current flows in a secondary battery, to a terminal or a related member. That is, according to the present disclosure, by partitioning a connection medium between an electrode tab or a related member and a terminal or a related member into two or more groups to distribute the generation of heat concentrating on the connection medium, it is possible to increase heat dissipation efficiency and, in particular, prevent disconnection due to the generation of heat as long as the current capacity of the connection medium is allowed even in a low-resistance short state of an external circuit. The present disclosure can be applied to all connection media included in various types and structures of batteries.

In some embodiments, the secondary battery may be a secondary battery having a side tab structure in which the electrode tab includes a first electrode tab and a second electrode tab that are positioned at both sides of the electrode assembly, respectively, and the terminal includes a first terminal and a second terminal electrically connected to the first electrode tab and a second electrode tab, respectively. In other some embodiments, the secondary battery may be a secondary battery having a top tab structure in which the electrode tab includes a first electrode tab and a second electrode tab that are positioned at one side of the electrode assembly and the terminal includes a first terminal and a second terminal electrically connected to the first electrode tab and a second electrode tab, respectively.

Aspects and features of the present disclosure are not limited to those described above, and other aspects and features not specifically mentioned herein will be clearly understood by those skilled in the art from the description of the present disclosure below.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

Embodiments are set out in the following clauses:
Clause 1. A secondary battery comprising:
   a can in which an opening is formed;
   an electrode assembly accommodated in the can and comprising an electrode tab;
   a terminal electrically connected to the electrode tab of the electrode assembly and positioned outside the can; and
   a plurality of connection members that electrically connect the electrode tab to the terminal,
   wherein the plurality of connection members comprise two or more groups.
Clause 2. The secondary battery according to clause 1, wherein the plurality of connection members comprise:
   a first welded portion formed by being welded to a current collector bonded to the electrode tab; and
   a second welded portion formed by being welded to the terminal.
Clause 3. The secondary battery according to clause 2, wherein the terminal comprises a rivet terminal positioned inside the can, and
   the second welded portion is formed by welding second ends of the plurality of connection members to the rivet terminal.
Clause 4. The secondary battery according to clause 2 or clause 3, wherein the first welded portion is formed separately in each group of the plurality of connection members or commonly in the groups.
Clause 5. The secondary battery according to any one of claims 2 to 4, wherein the second welded portion is formed separately in each group of the plurality of connection members or commonly in the groups.
Clause 6. The secondary battery according to any one of the preceding clauses, further comprising an insulator interposed between the groups of the plurality of connection members.
Clause 7. The secondary battery according to any one of the preceding clauses, wherein the electrode tab comprises a first electrode tab and a second electrode tab that are positioned at both sides of the electrode assembly, respectively, and
   the terminal comprises a first terminal and a second terminal electrically connected to the first electrode tab and the second electrode tab, respectively.
Clause 8. The secondary battery according to any one of the preceding clauses, wherein the electrode tab comprises a first electrode tab and a second electrode tab that are positioned at one side of the electrode assembly, and
   the terminal comprises a first terminal and a second terminal electrically connected to the first electrode tab and the second electrode tab, respectively.
Clause 9. A method of manufacturing a secondary battery, comprising:
   manufacturing a can in which an opening is formed;
   manufacturing an electrode assembly including an electrode tab;
   inserting the electrode assembly into the opening of the can;
   manufacturing a terminal electrically connected to the electrode tab of the electrode assembly; and
   connecting a plurality of connection members for electrically connecting the electrode tab to the terminal,
   wherein the plurality of connection members comprise two or more groups.
Clause 10. The method according to clause 9, wherein the manufacturing of the electrode assembly comprises bonding a current collector to the electrode tab.
Clause 11. The method according to clause 10, wherein the connecting of the plurality of connection members comprises:
   welding first ends of the plurality of connection members to the current collector bonded to the electrode tab and forming a first welded portion; and
   welding second ends of the plurality of connection members to the terminal and forming a second welded portion.
Clause 12. The method according to clause 11, wherein the manufacturing of the terminal comprises connecting a rivet terminal positioned inside the can to the terminal, and
   the second welded portion is formed by welding the second ends of the plurality of connection members to the rivet terminal.
Clause 13. The method according to clause 11 or claim 12, wherein the forming of the first welded portion comprises forming the first welded portion separately in each group of the plurality of connection members or commonly in the groups.
Clause 14. The method according to any one of clauses 11 to 13, wherein the forming of the second welded portion comprises forming the second welded portion separately in each group of the plurality of connection members or commonly in the groups.
Clause 15. The method according to any one of clauses 10 to 14, further comprising interposing an insulator between the groups of the plurality of connection members.
Clause 16. A secondary battery comprising:
   a can having openings formed on both sides;
   an electrode assembly accommodated in the can and including a first electrode tab and a second electrode tab that are positioned at both sides of the electrode assembly, respectively;
   a first current collector bonded to the first electrode tab of the electrode assembly;
   a second current collector bonded to the second electrode tab of the electrode assembly;
   a first terminal and a second terminal electrically connected to the first electrode tab and the second electrode tab, respectively;
   a plurality of first connection members that electrically connect the first current collector to the first terminal; and
   a plurality of second connection members that electrically connect the second current collector to the second terminal,
   wherein the plurality of first connection members comprise two or more groups, and
   the plurality of second connection members comprise two or more groups.
Clause 17. The secondary battery according to clause 16, wherein the plurality of first connection members comprise:
   a first welded portion formed by being welded to the current collector bonded to the electrode tab; and
   a second welded portion formed by being welded to the terminal, and
   the plurality of second connection members comprise:
      a third welded portion formed by being welded to the current collector bonded to the electrode tab; and
      a fourth welded portion formed by being welded to the terminal.
Clause 18. The secondary battery according to clause 17, wherein the first terminal comprises a first rivet terminal positioned inside the can,
   the second welded portion is formed by welding the plurality of first connection members to the first rivet terminal,
   the second terminal comprises a second rivet terminal positioned inside the can, and
   the fourth welded portion is formed by welding the plurality of second connection members to the second rivet terminal.
Clause 19. The secondary battery according to clause 17 or clause 18, wherein the first welded portion and the third welded portion are formed separately in each group of the plurality of connection members or commonly in the groups.
Clause 20. The secondary battery according to any one of clauses 17 to 20, wherein the second welded portion and the fourth welded portion are formed separately in each group of the plurality of connection members or commonly in the groups.

## Claims

1. A secondary battery, comprising:
a can with an opening;
an electrode assembly accommodated in the can, the electrode assembly comprising an electrode tab;
a terminal electrically connected to the electrode tab of the electrode assembly, the terminal being positioned outside the can; and
a plurality of connection members electrically connecting the electrode tab to the terminal, the plurality of connection members comprising two or more groups.

2. The secondary battery as claimed in claim 1, wherein the plurality of connection members comprise:
a first welded portion connected to a current collector bonded to the electrode tab; and
a second welded portion connected to the terminal.

3. The secondary battery as claimed in claim 2, wherein the:
terminal comprises a rivet terminal positioned inside the can, and
the second welded portion is connected to the rivet terminal.

4. The secondary battery as claimed in claim 2 or claim 3, wherein the first welded portion is separated in each of the two or more groups of the plurality of connection members.

5. The secondary battery as claimed in any one of claims 2 to 4, wherein the second welded portion is separated in each of the two or more groups of the plurality of connection members.

6. The secondary battery as claimed in any one of claims 2 to 5, wherein at least one of the first welded portion and the second welded portion is separated in each of the two or more groups of the plurality of connection members.

7. The secondary battery according to any one of the preceding claims, further comprising an insulator between the two or more groups of the plurality of connection members.

8. The secondary battery according to any one of the preceding claims1, wherein:
the electrode tab comprises a first electrode tab and a second electrode tab that are positioned at opposite sides of the electrode assembly, respectively, and
the terminal comprises a first terminal and a second terminal electrically connected to the first electrode tab and the second electrode tab, respectively.

9. A method of manufacturing a secondary battery, the method comprising:
manufacturing a can in which an opening is formed;
manufacturing an electrode assembly comprising an electrode tab;
inserting the electrode assembly into the opening of the can;
manufacturing a terminal electrically connected to the electrode tab of the electrode assembly; and
connecting a plurality of connection members for electrically connecting the electrode tab to the terminal, the plurality of connection members comprising two or more groups.

10. The method as claimed in claim 9, wherein manufacturing the electrode assembly comprises bonding a current collector to the electrode tab.

11. The method as claimed in claim 10, wherein connecting the plurality of connection members comprises:
welding first ends of the plurality of connection members to the current collector bonded to the electrode tab and forming a first welded portion; and
welding second ends of the plurality of connection members to the terminal and forming a second welded portion.

12. The method as claimed in claim 11, wherein:
manufacturing the terminal comprises connecting a rivet terminal positioned inside the can to the terminal, and
the second welded portion is formed by welding the second ends of the plurality of connection members to the rivet terminal.

13. The method as claimed in claim 11 or claim 12, wherein forming the first welded portion comprises forming the first welded portion separately in each group of the plurality of connection members or commonly in the groups.

14. The method as claimed in any one of claims 11 to 13, wherein forming the second welded portion comprises forming the second welded portion separately in each group of the plurality of connection members or commonly in the groups.

15. The method as claimed in any one of claims 10 to 14, further comprising interposing an insulator between the groups of the plurality of connection members.
